# EUROPÄISCHE PATENTANMELDUNG

(11) **EP 0 654 740 A1**
(43) Veröffentlichungstag der Anmeldung: **24.05.1995**
(21) Anmeldenummer: 93118775.1
(22) Anmeldetag: 22.11.1993
(51) Int. Cl.: G06F 13/378

(54) **Bussteuerung**

(71) Anmelder: SIEMENS AKTIENGESELLSCHAFT, D-80333 München (DE)
(72) Erfinder: Weber, Karl, Dr.-Ing., D-90518 Altdorf (DE); Spichtinger, Klaus, Dipl.-Ing., D-92551 Stulln (DE); Kremer, Karl-Theo, Dipl.-Ing., D-91325 Adelsdorf (DE)

(57) **Zusammenfassung**

Die vorliegende Erfindung betrifft einen Buscontroller (5) für ein elektronisches Gerät (2), das eine eigene Intelligenz (3) und einen Speicher (4) mit einer Vielzahl einzeln adressierbarer Speicherplätze (z. B. 21,40) aufweist, die über einen Gerätebus (6) miteinander verbunden sind, wobei der Buscontroller (5) zumindest mit dem Speicher (4) und einem Vernetzungsbus (1) verbindbar ist. Erfindungsgemäß erfolgt die Verwaltung von zu sendenden bzw. zu empfangenden Anforderungen bzw. von gesendeten bzw. empfangenen Anforderungen über voneinander getrennte, doppelt verkettete Listen.

## Beschreibung

Die vorliegende Erfindung betrifft einen Buscontroller für ein elektronisches Gerät, das eine eigene Intelligenz und einen Speicher mit einer Vielzahl einzeln adressierbarer Speicherplätze aufweist, die über einen Gerätebus miteinander verbunden sind, wobei der Buscontroller zumindest mit dem Speicher und einem Vernetzungsbus verbindbar ist.

Derartige Buscontroller sind weit verbreitet. Sie werden beispielsweise bei Feldbussen wie dem PROFIBUS eingesetzt. Das PROFIBUS-Protokoll schreibt beispielsweise vor, wie einzelne Sende- bzw. Empfangsauftrage nach außen hin, d. h. auf dem Vernetzungsbus, abzuwickeln sind. Es liefert jedoch keinerlei Anregungen, wie Sende- und Empfangsaufträge geräteintern effektiv verwaltbar sind.

Die Aufgabe der vorliegenden Erfindung besteht folglich darin, einen Buscontroller zur effektiven geräteinternen Auftragsverwaltung zur Verfügung zu stellen.

Die Aufgabe wird durch die Merkmale der Ansprüche 1, 11 und 16 gelöst.

Gemäß Anspruch 1 verwaltet hierzu der Buscontroller mindestens eine Anforderungsempfangswarteschlange mit Warteschlangenelementen für über den Vernetzungsbus zu empfangende Anforderungen, wobei die Warteschlange als doppelt verkettete Liste organisiert ist. Dadurch ist es nämlich besonders einfach, beliebige Warteschlangenelemente aus der Warteschlange ein- und auszuketten.

Die Verwaltung mindestens einer Anforderungsempfangswarteschlange ohne Anforderungssendewarteschlange ist hinreichend, wenn das elektronische Gerät lediglich Anforderungen empfängt und beantwortet, nicht aber selbst eigene Anforderungen sendet. Wenn das elektronische Gerät dagegen selbst als Sender aktiv sein kann, verwaltet der Buscontroller auch mindestens eine Anforderungssendewarteschlange mit Warteschlangenelemente für zu sendende Anforderungen, die ebenfalls ein doppelt verkette Liste organisiert ist.

Vorzugsweise verwaltet der Buscontroller auch mindestens eine Erledigungswarteschlange für empfangene bzw. gesendete Anforderungen, die ebenfalls als doppelt verkettete Liste organisiert ist. In diesem Fall wird nach dem Empfangen bzw. Senden einer Anforderung das erste Element der entsprechenden Anforderungswarteschlange aus dieser Warteschlange ausgekettet und als letztes Element in die Erledigungswarteschlange eingekettet. Besonders vorteilhaft verwaltet der Buscontroller getrennte Erledigungswarteschlangen für gesendete bzw. empfangene Anforderungen.

Das elektronische Gerät, mit dem der Buscontroller verbunden ist, arbeitet üblicherweise mehrere Applikationen ab. Diese Applikationen werden im folgenden als Eigenapplikationen bezeichnet. Andere elektronische Geräte arbeiten ebenfalls Applikationen ab, die im folgenden zur Unterscheidung als Fremdapplikationen bezeichnet werden. Zur Kommunikation zwischen Eigenapplikationen und Fremdapplikationen stellt der Buscontroller mindestens einen Kommunikationsdienstzugriffspunkt bereit, der mindestens eine Warteschlange für zu empfangende Anforderungen umfaßt.

Vorzugsweise stellt der Buscontroller sogar für jede Kommunikationsbeziehung zwischen einer Eigenapplikation und einer Fremdapplikation einen eigenen Kommunikationsdienstzugriffspunkt bereit. Dadurch ist die Kommunikation verschiedener Eigenapplikationen voneinander entkoppelbar.

Die Kommunikation läßt sich besonders effizient abwickeln, wenn der Buscontroller für jeden Dienstzugriffspunkt je eine Empfangswarteschlange für zu empfangende Anforderungen und eine - davon getrennte - Antwortwarteschlange für zu sendende Antworten auf empfangene Anforderungen verwaltet. Prinzipiell ist aber auch die Verwaltung nur einer Warteschlange für zu empfangende Anforderungen und zu sendende Antworten möglich.

Die Kommunikation zwischen der Intelligenz und dem Buscontroller erfolgt im Regelfall gemäß einer vorbestimmten Schnittstellendefinition, z. B. in der Schicht 4 des ISO-7-Schichten-Modells. Die Speicherverwaltung ist in einem solchen Fall besonders effizient, wenn die Warteschlangen je aus einem Warteschlangenkopf und Verwaltungblöcken als Warteschlangeneinträgen bestehen, wobei in den Verwaltungsblöcken verwaltungsblockspezifische Warteschlangenverwaltungsdaten (Adreßpointer zum vorhergehenden und zum nachfolgenden Warteschlangenelement), nutzdatenspezifische Speicherverwaltungsdaten (Adresse mindestens eines Nutzdatenblocks und zugehörige Datenblocklänge) sowie schnittstellenspezifische Verwaltungsdaten abgespeichert sind. Beim PROFIBUS sind diese schnittstellenspezifischen Verwaltungsdaten beispielsweise die sogenannten Layer-4-Daten. Dadurch, insbesondere aufgrund der schnittstellenspezifischen Verwaltungsdaten, ist es möglich, auch umfangreiche Nutzdatenmengen stückweise ohne geräteinternes Umkopieren in einzelnen Nutzdatenblöcken über den Vernetzungsbus zu übertragen.

Wenn der Buscontroller Anforderungen gemäß einem vorbestimmten Busprotokoll über den Vernetzungsbus sendet, sind in den Verwaltungsblöcken vorzugsweise zusätzlich anforderungsspezifische Protokollrahmendaten abgespeichert. Bezüglich zu empfangender Anforderungen sind im Warteschlangenkopf der Anforderungsempfangswarteschlange Vergleichsdaten abgespeichert, mittels derer die Protokollrahmendaten einer empfangenen Anforderungen überprüfbar sind. Dadurch ist es möglich, in der Anforderungsempfangswarteschlange nur solche empfangenen Anforderungen abzuspeichern, deren Protokollrahmendaten mit den Vergleichsdaten übereinstimmen, also von der durch die Vergleichsdaten bestimmten Fremdapplikation gesendet wurden.

Weitere Vorteile und Einzelheiten ergeben sich aus der nachfolgenden Beschreibung eines Ausführungsbeispiels, anhand der Zeichnungen und in Verbindung mit den Unteransprüchen. Dabei zeigen:
- FIG 1: einen Vernetzungsbus mit mehreren daran angeschlossenen elektronischen Geräten,
- FIG 2: das Prinzip der Speicherverwaltung eines der elektronischen Geräte,
- FIG 3: den Aufbau einer Warteschlange,
- FIG 4: den Aufbau eines Verwaltungsblocks und
- FIG 5: den Aufbau einer Nachricht.

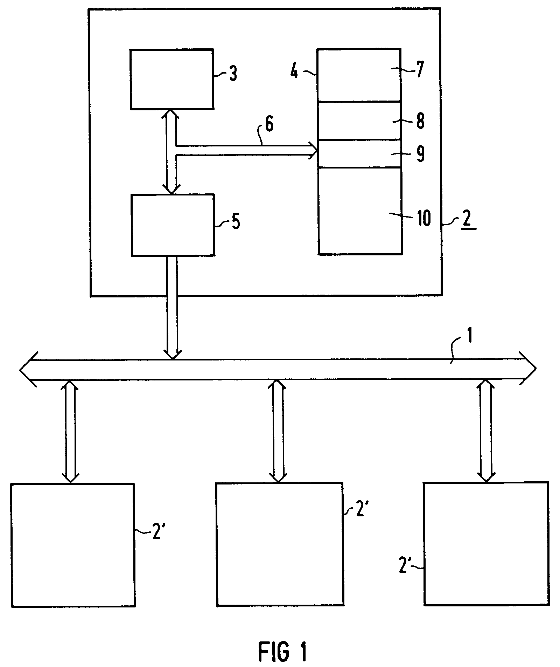

Gemäß FIG 1 sind an den Vernetzungsbus 1 mehrere elektronische Geräte 2, 2' angeschlossen. Die elektronischen Geräte 2, 2' sind beispielsweise speicherprogrammierbare Steuerungen oder intelligente Feldklemmen. Das elektronische Gerät 2 weist einen Prozessor 3, einen Speicher 4 und einen Buscontroller 5 auf, die über den Gerätebus 6 miteinander verbunden sind. Der Speicher 4 beinhaltet dabei eine Vielzahl einzeln adressierbarer Speicherplätze oder Speicherzellen.

Die anderen elektronischen Geräte 2' sind im Prinzip genauso wie das elektronische Gerät 2 aufgebaut. Auf eine detaillierte Darstellung der elektronischen Geräte 2' wurde daher aus Gründen der besseren Übersichtlichkeit verzichtet.

Der Vernetzungsbus 1 ist beispielsweise ein serieller Bus, der gemäß dem normierten PROFIBUS-Protokoll betrieben wird. Der Vernetzungsbus 1 könnte aber auch auf andere Art betrieben werden oder ein Parallelbus sein.

Der Speicher 4 weist mehrere Speicherbereiche 7 bis 10 auf. Im Speicherbereich 7 ist das vom Prozessor 3 abgearbeitete Programm abgespeichert. Im Speicherbereich 8 sind die zugehörigen Daten hinterlegt. Der Speicherbereich 9 bildet den sogenannten Systemkontrollblock, auf den später noch näher eingegangen wird. Im Speicherbereich 10 sind die Verwaltungsblöcke (application blocks) abgespeichert, auf die später in Verbindung mit dem Systemkontrollblock 9 ebenfalls noch näher eingegangen wird.

Im folgenden wird beschrieben, wie der Buscontroller 5 auf den Speicher 4 zugreift. Es wird also beschrieben, wie der Buscontroller 5 zu sendende Anforderungen im Speicher 4 findet, wie der Buscontroller 5 empfangene Anforderungen im Speicher 4 ablegt und dergleichen mehr. Wie der Prozessor 3 auf den Speicher 4 zugreift, wird im folgenden nicht beschrieben. Es ist aber selbstverständlich, daß der Prozessor 3, soweit es den Datenverkehr mit dem Buscontroller 5 betrifft, korrespondierende Speicherzugriffe ausführen muß.

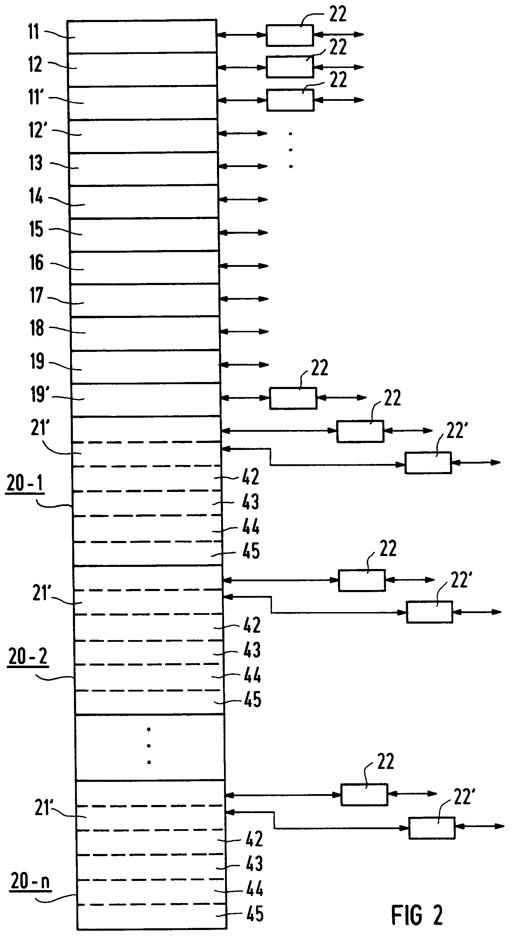

Zur effektiven Datenverwaltung richtet der Prozessor 3 bei der Inbetriebnahme des elektronischen Geräts 2 den in FIG 2 dargestellten Systemkontrollblock 9 ein. Der Prozessor 3 speichert hierzu in jedem Teilsegment 11 bis 20-n zwei Adressen ab. Sie zeigen jeweils auf das erste bzw. das letzte Element einer Warteschlange von Verwaltungsblöcken. Je nach Konfiguration und Parametrierung des elektronischen Geräts 2 könnte der Systemkontrollblock 9 aber auch vom Buscontroller 5 eingerichtet werden.

Die Basisadresse, ab der der Systemkontrollblock 9 eingerichtet wird, wird dem Buscontroller 5 vom Prozessor 3 mitgeteilt. Alternativ dazu ist es möglich, daß der Buscontroller 5 die Basisadresse vom Prozessor 3 abfragt. In beiden Fällen aber sind alle Daten des Systemkontrollblocks 9 einfach auffindbar, da bekannt ist, unter welcher Relativadresse ab der Basisadresse ein Datum abgespeichert ist.

Über den Vernetzungsbus 1 werden Anforderungen und Antworten auf Anforderungen übertragen. Sowohl Anforderungen als auch Antworten müssen gesendet und empfangen werden. Der Systemkontrollblock 9 besteht daher aus folgenden Teilsegmenten:
- Einem Teilsegment 11 für eine Anforderungssendewarteschlange für hochpriore zu sendende Anforderungen. Diese Warteschlange wird vom Buscontroller 5 stets bedient.
- Einem Teilsegment 12 für eine Anforderungssendewarteschlange für niederpriore zu sendende Anforderungen. Diese Warteschlange wird vom Buscontroller 5 bedient, wenn er sich im Betriebsmodus (Operating message) befindet und die hochpriore Warteschlange 11 leer ist.
- Teilsegmente 11', 12' für Anforderungssendewarteschlangen für hoch- bzw. niederpriore Hintergrundanforderungen. Diese Warteschlangen werden vom Buscontroller 5 bedient, wenn er sich im Hintergrundmodus (background message) befindet und die Warteschlange 11 leer ist. In welchem der beiden Moden sich der Buscontroller 5 befindet, wird dabei durch den Prozessor 3 bestimmt, der den Buscontroller 5 nach Bedarf umschaltet.
- Je einem Teilsegment 13, 14 für eine Erledigungswarteschlange für hoch- bzw. niederpriore empfangene Anforderungen.
- Je einem Segment 15, 16 für eine Erledigungswarteschlange für hoch- bzw. niederpriore gesendete Anforderungen.
- Je einem Segment 17, 18 für eine Erledigungswarteschlange für nicht ordnungsgemäß erledigbare hoch- bzw. niederpriore Anforderungen.
- Einem Teilsegment 19 für eine Monitorwarteschlange zum Überwachen des Vernetzungsbusses 1.
- Einen Teilsegment 19' für eine Identifizierungswarteschlange zum Hinterlegen einer vernetzungsbusbezogenen Buscontrolleridentifizierungsmeldung.
- Einer Anzahl von Segmenten 20-1 bis 20-n für je eine Anforderungsempfangswarteschlange. Die Empfangswarteschlangen korrespondieren aufgrund ihrer Anordnung mit einer Dienstzugriffsadresse, mittels derer sie voneinander unterscheidbar sind.

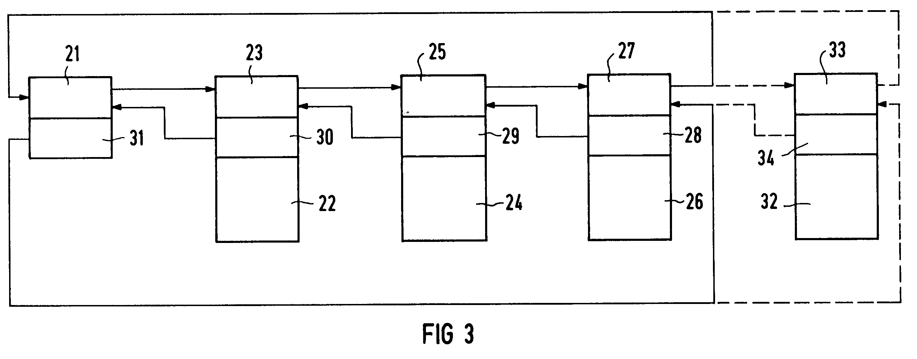

Alle Warteschlangen werden vom Buscontroller 5 verwaltet. Anhand von FIG 3 wird nun der Aufbau der Warteschlangen erläutert. Bezüglich der Erläuterungen zu FIG 3 ist dabei irrelevant, um welche der Warteschlangen es sich handelt.

Gemäß FIG 3 ist im ersten Speicherplatz 21 des der jeweiligen Warteschlange zugeordneten Teilsegments - auch Warteschlangenkopf genannt - eine Adresse abgespeichert, die auf den ersten Verwaltungsblock 22 der betreffenden Warteschlange zeigt. Im ersten Speicherplatz 23 dieses Verwaltungsblocks 22 ist wiederum eine Adresse abgespeichert, die auf den zweiten Verwaltungsblock 24 der betreffenden Warteschlange zeigt. Die Adresse im ersten Speicherplatz 25 dieses Verwaltungsblocks 24 zeigt dann auf den dritten und im vorliegenden Fall letzten Verwaltungsblock 26 der betreffenden Warteschlange. In diesem Verwaltungsblock 26 ist im ersten Speicherplatz 27 die Startadresse der jeweiligen Warteschlange abgespeichert, die zurück auf das zugehörige Teilsegment des Systemkontrollblocks 9 zeigt. Durch diese Art der Verzeigerung wird eine einfach vorwärts verkettete Liste geschaffen.

Um auch eine rückwärts verkettete Liste zu erhalten, im Ergebnis also eine doppelt verkettete Liste, ist in den Speicherplätzen 28 bis 31 die Adresse des jeweils vorhergehenden Verwaltungsblocks abgespeichert. Im Speicherplatz 28 ist also die Adresse des Verwaltungsblocks 24 abgespeichert, im Speicherplatz 29 die des Verwaltungsblocks 22 und im Speicherplatz 30 die Startadresse des jeweiligen Segments. Im Speicherplatz 31 ist noch die Adresse des letzten Verwaltungsblocks 26 abgespeichert.

Um den ersten Verwaltungsblock 22 aus einer solchen Liste auszuketten bzw. auszugliedern, wird wie folgt vorgegangen:
Zunächst wird aus dem Speicherplatz 21 die Adresse für den Verwaltungsblock 22 ausgelesen. Sodann wird aus dem Speicherplatz 23 die Adresse des Verwaltungsblocks 24 ausgelesen. Diese Adresse wird dann im Speicherplatz 21 abgespeichert. Bezüglich der Vorwärtsverkettung ist der Verwaltungsblock 22 damit bereits aus der Liste ausgekettet. Um den Verwaltungsblock 22 auch aus der rückwärts verketteten Liste auszuketten, wird in den Speicherplatz 29 die Adresse des zugehörigen Teilsegments eingeschrieben, also die Adresse, die zuvor im Speicherplatz 30 abgespeichert war.

Der Verwaltungsblock 22 ist damit aus der Warteschlange ausgegliedert. Um der Warteschlange einen zusätzlichen Verwaltungsblock 32 anzugliedern, wird wie folgt vorgegangen:
Zunächst sei erwähnt, daß die Adresse dieses Verwaltungsblocks 32 selbstverständlich bekannt sein muß. Die Adresse kann beispielsweise dadurch bekannt sein, daß der Verwaltungsblock unmittelbar zuvor aus einer anderen Warteschlange ausgekettet wurde oder aber daß der Verwaltungsblock 32 soeben vom Prozessor 3 generiert wurde.

Um den Verwaltungsblock 32 in die vorwärts verkettete Liste einzuketten, wird die im Speicherplatz 31 abgespeicherte Adresse ausgelesen und die Adresse des Verwaltungsblocks 32 in den Speicherplatz 27 eingeschrieben. Ferner wird in den Speicherplatz 33 die Adresse des Teilsegments, die zuvor im Speicherplatz 27 abgespeichert war, abgespeichert. In analoger Weise wird zur Aufnahme des Verwaltungsblocks 32 in die rückwärts verkettete Liste die Adresse des Verwaltungsblocks 26 im Speicherplatz 34 abgelegt sowie die Adresse des Verwaltungsblocks 32 im Speicherplatz 31. Damit ist der Verwaltungsblock 32 der Warteschlange als letztes Element angegliedert.

Mit Ausnahme der Monitorwarteschlange, auf die später noch eingegangen wird, sind alle Listen bzw. Warteschlangen gleich aufgebaut, also auf die gleiche Weise verkettet. Folglich läuft das Ein- und Ausketten von Verwaltungsblöcken aus Warteschlangen stets gleich ab. Es ist also unabhängig davon, aus welcher Warteschlange ein Verwaltungsblock ausgekettet bzw. in welche Warteschlange er eingekettet wird.

Ferner ist es aufgrund der doppelten Verkettung leicht möglich, einen beliebigen Block aus einer Warteschlange auszuketten bzw. in eine Warteschlange einzuketten. Bei einer einfach verketteten Liste wäre dies nur mit einmaligem Durchsuchen der ganzen Kette möglich. Bei der doppelten Verkettung ist es also leicht möglich, einzelne Anforderungen, die aufgrund von Verwaltungsblöcken definiert sind, zu löschen oder neu einzufügen.

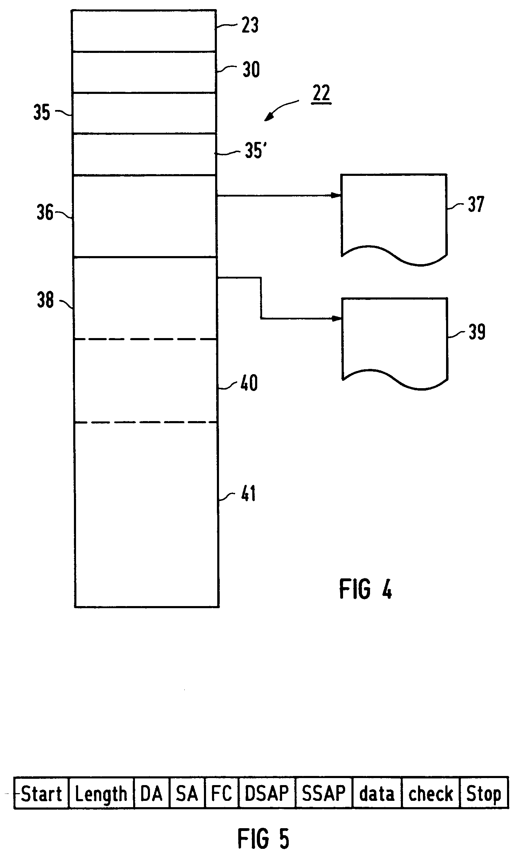

Der Aufbau der Verwaltungsblöcke 22, 24, 26 wird nunmehr anhand von FIG 4 beispielhaft für den Verwaltungsblock 22 erläutert.

Gemäß FIG 4 besteht der Verwaltungsblock 22 außer den bereits erwähnten Speicherplätzen 23 und 30 aus folgenden Elementen:
- Einem Speicherblock 35, in dem ein sogenannter Operationscode abgespeichert ist. Durch den Operationscode ist beispielsweise festgelegt, ob der Verwaltungsblock 22 momentan vom Prozessor 3 oder vom Buscontroller 5 verwaltet wird und ob der Verwaltungsblock 22 in eine Anforderungssendewarteschlange, in eine Anforderungsempfangswarteschlange oder in eine Antwortsendewarteschlange eingekettet ist.
- Einem Speicherblock 35', in dem organisatorische Daten abgespeichert sind, die für die Auftragsverwaltung durch den Buscontroller 5 ohne Belang sind. Für die korrespondierende Auftragsverwaltung durch den Prozessor 3 sind die Daten dagegen von Belang. Die organisatorischen Daten umfassen beispielsweise einen Identifikationscode, mittels dessen der Prozessor 3 den Verwaltungsblock 22 einer bestimmten Eigenapplikation zuordnen kann.
- Einem Speicherblock 36, den sogenannten Response-Header, in dem die Anfangsadresse eines Antwortdatenblocks 37, die Länge dieses Datenblocks 37 und der Status des Datenblocks 37 abgespeichert sind.
- Einem Speicherblock 38, den sogenannten Request-Header, in dem die Anfangsadresse eines Anforderungsdatenblocks 39 und dessen Länge abgespeichert sind. Ferner weist der Request-Header 38 noch zwei Teilblöcke 40, 41 auf. Im Teilblock 40 sind anforderungsspezifische Protokollrahmendaten abgespeichert. Es sind dies zunächst die eigene vernetzungsbusspezifische Adresse des elektronischen Geräts 2 sowie die Nummer des eigenen Dienstzugriffspunkts. Ferner sind im Teilblock 40 die vernetzungsbusspezifische Adresse eines anderen elektronischen Geräts 2' und eine Dienstzugriffspunktadresse des anderen elektronischen Geräts 2' abgespeichert. Durch diese vier Daten ist festgelegt, zwischen welchen Dienstzugriffspunkten welcher Geräte 2, 2' die Kommunikation erfolgt. Ferner ist im Teilblock 40 noch abgespeichert, welcher Funktionsart die Anforderung angehört. Schließlich sind im Teilblock 41 Verwaltungsdaten eines übergeordneten Protokolls abgespeichert, im vorliegenden Fall die Layer-4-Daten des ISO-7-Schichten-Modells.

Im folgenden wird beschrieben, welche Schritte der Buscontroller 5 ausführt, wenn er eine Anforderung senden will. Die Anforderung wird dabei gemäß einem bestimmten Busprotokoll gesendet. Die Erläuterung dieses Protokolls erfolgt später in Verbindung mit FIG 5, soweit es für das Verständnis der vorliegenden Erfindung erforderlich ist. Der besseren Anschaulichkeit halber sei daher im folgenden zunächst angenommen, daß in FIG 3 eine der Anforderungssendewarteschlangen dargestellt ist. Die Speicherplätze 21 und 31 entsprechen daher unter dieser Annahme einem der Teilsegmente 11, 11', 12 oder 12'.

Zum Senden der Anforderung liest der Buscontroller 5 aus dem Speicherplatz 21 die Adresse des ersten Verwaltungsblocks 22 aus. Sodann liest der Buscontroller 5 den Teilblock 40 vollständig sowie aus dem Speicherblock 38 die Anfangsadresse des Anforderungsdatenblocks 39 aus. Ferner liest der Buscontroller 5 die Länge des Anforderungsdatenblocks 39 aus. Die Datenlänge entspricht beim Senden von Anforderungen der tatsächlichen Datenlänge. Sodann liest der Buscontroller aus dem Datenblock 39 die dort abgespeicherten Daten aus und sendet sie zusammen mit den Protokollrahmendaten, den Verwaltungsdaten des übergeordneten Protokolls, die im Teilblock 41 abgespeichert sind, und der Datenlänge über den Vernetzungsbus 1. Die Verwaltungsdaten des übergeordneten Protokolls werden dabei nach den Protokollrahmendaten, aber vor den eigentlichen Nutzdaten über den Vernetzungsbus 1 gesendet. Bei manchen Anforderungen erwartet der Buscontroller 5 keine Antwort, bei manchen nur eine Empfangsbestätigung. In diesem Fällen beginnt der Buscontroller 5 sofort nach dem Senden der Anforderung bzw. dem Empfang der Quittierung vom Empfangsgerät mit dem Ausketten des Verwaltungsblocks 22 aus der Warteschlange. Wenn die Anforderung jedoch beantwortet werden muß, geht der Buscontroller 5 wie folgt vor:
Der Buscontroller 5 liest aus dem Speicherblock 36 die Adresse aus, die auf den Antwortdatenblock 37 zeigt. Ferner liest er aus dem Speicherblock 36 die maximale Antwortlänge aus. Die empfangene Antwort speichert der Buscontroller 5 in dem Datenblock 37 ab. Ferner kennt der Buscontroller 5 aufgrund des empfangenen Protokolls die tatsächliche Länge der Antwort und speichert sie im Speicherblock 36 ab. Nach dem Abspeichern der Antwort wird der Verwaltungsblock 22 aus der Anforderungssendewarteschlange ausgekettet und als letztes Element in die korrespondierende Erledigungswarteschlange für gesendete Anforderungen bzw. in die korrespondierende Erledigungswarteschlange für nicht ordnungsgemäß erledigte Anforderungen eingekettet, je nachdem, ob der Sendeauftrag ordnungsgemäß erledigt werden konnte oder nicht.

Eine Anforderung muß selbstverständlich nicht nur von einem Gerät 2 gesendet werden, er muß auch von einem anderen Gerät 2' empfangen und gegebenenfalls beantwortet werden. Um einen ordnungsgemäßen Datenverkehr über den Vernetzungsbus 1 zu gewährleisten, haben Nachrichten daher den in FIG 5 dargestellten Aufbau. Gemäß FIG 5 besteht eine über den Vernetzungsbus 1 übertragene Nachricht aus folgenden Elementen:
- Einem Startblock Start, z. B. einem Startbyte mit einem bestimmten Bitmuster, sowie einem Längenblock length, der die Datenlänge der Nachricht widerspiegelt. Je nach Startblock kann auch bereits durch den Startblock Start selbst die Länge festgelegt sein. In diesem Fall entfällt der Längenblock length.
- Einer Zielcontrolleradresse DA (= destination address), mittels derer der Buscontroller festgelegt ist, für den die Nachricht bestimmt ist.
- Einer Sendecontrolleradresse SA (= source address) mittels derer das empfangende Gerät feststellen kann, von welchem Buscontroller die Nachricht gesendet wurde.
- Einem Funktionsblock FC (= function), der die Funktionsart der übertragenen Daten angibt.
- Einer Zieldienstzugriffsadresse DSAP (= destination service access point), mittels derer festgelegt wird, mit welcher Applikation des Empfangsgeräts kommuniziert werden soll.
- Einer Sendedienstzugriffsadresse SSAP (= source service access point), mittels derer der empfangende Buscontroller feststellen kann, von welcher Applikation des sendenden Geräts eine Nachricht kommt.
- Den eigentlichen Daten data.
- Einem Prüfblock check mit einer Prüfsumme, z. B. einem CRC (= cyclically redundancy check) und
- einem Stopblock Stop, z. B. einem Stopbyte mit einem bestimmten Bitmuster.

Analog zur Beschreibung eines Sendeauftrags wird im folgenden der besseren Anschaulichkeit halber angenommen, daß in FIG 3 eine der Empfangswarteschlangen dargestellt ist. Die Speicherplätze 21 und 31 entsprechen daher unter dieser Annahme einem der Teilsegmente 20-1 bis 20-n.

Beim Detektieren des Startblocks Start gehen zunächst alle an den Vernetzungsbus 1 angeschlossenen elektronischen Geräte 2, 2' außer dem sendenden Gerät auf Empfang. Sowie sie die Zielcontrolleradresse DA empfangen haben, vergleichen sie diese Adresse DA mit ihrer eigenen Controlleradresse. Alle Buscontroller 5 mit einer von der empfangenen Zielcontrolleradresse DA verschiedenen Adresse beenden daraufhin den weiteren Empfang der Nachricht. Nur das elektronische Gerät 2, dessen eigene Adresse gleich der Zielcontrolleradresse DA ist, empfängt die gesamte Nachricht.

Nach dem Empfang von Zieldienstzugriffsadresse DSAP, Sendecontrolleradresse SA und Sendedienstzugriffsadresse SSAP, Funktionsblock FC sowie der Datenlänge length führt der Buscontroller 5 zunächst folgende Schritte aus:
Er liest aus dem Teilsegment, das der durch die Zieldienstzugriffsadresse DSAP definierten Anforderungsempfangswarteschlange zugeordnet ist, im vorliegenden Fall also z. B. aus dem Teilsegment 20-1, aus den Speicherplätzen 42 bis 45 die maximal zulässige Datenlänge, den erwarteten Funktionscode, die erwartete Controlleradresse und die erwartete Dienstzugriffsadresse aus. Sodann vergleicht der Buscontroller diese Werte mit dem empfangenen Funktionscode FC, der empfangenen Nachrichtenlänge length, der empfangenen Sendecontrolleradresse SA und der empfangenen Sendedienstzugriffsadresse SSAP. Wenn die Funktionscodes oder die Adressen nicht übereinstimmen oder die tatsächliche Datenlänge length größer als die maximale Datenlänge ist, unterdrückt der Buscontroller 5 das Abspeichern der Daten und sendet eine Negativquittung.

Andernfalls liest der Buscontroller 5 aus dem Speicherplatz 21 die Adresse des ersten Verwaltungsblocks 22 aus. Sodann speichert der Buscontroller 5 die Verwaltungsdaten des übergeordneten Protokolls im Teilblock 41 ab. Als nächstes speichert der Buscontroller 5 die empfangenen Protokollrahmendaten im Speicherblock 40 ab. Sodann liest der Buscontroller 5 aus dem Speicherblock 38 des Verwaltungsblocks 22 die Adresse aus, die auf den Anforderungsdatenblock 39 zeigt und speichert die empfangene Anforderung dort ab.

Ferner speichert der Buscontroller 5 die tatsächliche Datenlänge im Speicherblock 38 ab.

Wie bereits beim Senden von Aufträgen erläutert, ist in manchen Fällen keine Antwort nötig, bei manchen nur eine Empfangsbestätigung. Wenn dagegen eine Antwort nötig ist, geht der Buscontroller 5 wie folgt vor:
Wie aus FIG 2 ersichtlich ist, sind pro Dienstzugriffspunkt 20-1 bis 20-n je zwei Warteschlangen vorhanden. In die eine Warteschlange werden empfangene Anforderungen eingekettet, in der anderen Warteschlange sind Antworten auf zu empfangende Anfragen bereitgestellt. Die Aufteilung von Anforderungen und Antworten in zwei getrennte Warteschlangen ermöglicht ein leichteres Aktualisieren der Antwortwarteschlange. Prinzipiell wäre die Verwaltung von Anforderungen und Antworten aber auch in einer Warteschlange möglich. Ein derartiges leichteres Aktualisieren der Antwortwarteschlange ergibt sich beispielsweise dann, wenn die Antwortwarteschlange außer dem Warteschlangenkopf nur aus einem einzigen Verwaltungsblock besteht, der jedoch nicht zurück auf den Warteschlangenkopf verkettet ist, sondern auf sich selbst zeigt. Wenn der Buscontroller 5 nämlich versucht, diesen Verwaltungsblock nach dem üblichen Verfahren aus der Warteschlange auszuketten, so bewirkt dieses versuchte Ausketten nicht tatsächlich das Ausketten des Verwaltungsblocks. Der Verwaltungsblock wird also immer wieder gesendet. Diese Art Verwaltungsblock ist besonders vorteilhaft, wenn z. B. ein Meßergebnis zurückgemeldet werden soll, da in diesem Fall der Meßwert nur einmal in einem Datenblock abgespeichert werden muß.

Nach dem Abspeichern der empfangenen Anforderung im Datenblock 39 liest der Buscontroller 5 daher zunächst aus dem Speicherplatz 21' die Adresse aus, die auf den ersten Verwaltungsblock 22' der Antwortsendewarteschlange zeigt.

Sodann liest der Buscontroller 5 aus dem Speicherblock 36 die Adresse des Antwortdatenblocks 37 und die zugehörige Datenlänge aus. Sodann liest der Buscontroller 5 die Antwort selbst aus und sendet sie über den Vernetzungsbus 1 zurück. Danach werden die Verwaltungsblöcke 22 und 22' aus den Warteschlangen ausgekettet und als letztes Element in die Erledigungswarteschlange für empfangene Anfragen eingekettet.

Das Einketten erfolgt entweder in die hochpriore oder in die niederpriore Erledigungswarteschlange für empfangene Anforderungen, je nachdem, ob die Anforderung hoch- oder niederprior ist. Die Priorität einer Anforderung kann z. B. aus dem Funktionscode FC ersichtlich sein. Ebenso ist es aber auch möglich, die Priorität der übertragenen Daten als separaten Parameter in einer Nachricht mit zu übertragen.

In jedem der elektronischen Geräte 2, 2' laufen in der Regel eine Vielzahl von Applikationen ab. Bezüglich die Kommunikation zwischen den elektronischen Geräten 2, 2' unterscheidet daher jedes Gerät zwischen den Applikationen, die es selbst abarbeitet, und den Applikationen, die von anderen Geräten abgearbeitet werden. Die Applikationen, die ein Gerät selbst abarbeitet, sind bezüglich des Gerätes Eigenapplikationen, die anderen Fremdapplikationen.

Damit sich die Kommunikationen nicht gegenseitig stören oder sonst negativ beeinflussen, erfolgt eine getrennte Resourcen- bzw. Speicherverwaltung bezüglich jeder Kommunikationsbeziehung. Der Buscontroller 5 verwaltet daher nicht nur einen, sondern eine Vielzahl von Dienstzugriffspunkten. Jeder Dienstzugriffspunkt ist in der Regel der Kommunikation genau einer Eigenapplikation mit genau einer Fremdapplikation zugeordnet.

Die Zahl der möglichen Dienstzugriffspunkte ist aufgrund der Auslegung des Buscontrollers 5 und der Definition des Busprotokolls begrenzt. Wenn nun zuviele Eigenapplikationen mit zu vielen Fremdapplikationen kommunizieren wollen, kann es daher geschehen, daß die Zahl der bereitstellbaren Dienstzugriffspunkte hierzu nicht ausreicht. In einem solchen Fall könnte ein Teil der Kommunikationen nicht erfolgen, wenn die Kommunikationen ausschließlich über "private Zweierbeziehungen", also einen eigenen Dienstzugriffspunkt, erfolgen können. Die Dienstzugriffspunkte können daher derart parametriert werden, daß sie nicht nur von einem, sondern auch von mehreren Quelldienstzugriffspunkten aus ansprechbar sind. Dadurch kann - allerdings unter Aufgabe der "Privatheit der Applikationsbeziehungen" - eine beliebig hohe Zahl von Applikationsbeziehungen verwaltet werden.

Über die oben beschriebenen Kommunikationsdienstzugriffspunkte erfolgten Kommunikationen zwischen verschiedenen Applikationen. Um zusätzliche Kommunikationen ausführen zu können, die aufgrund der Verwaltung des Vernetzungsbusses 1 durch die Buscontroller 5 erforderlich sind, stellen die Buscontroller 5 zusätzlich zu den Kommunikationsdienstzugriffspunkten noch eine relativ geringe Anzahl, bei der PROFIBUS-Erweiterung ISP maximal 5, von sogenannten Servicemanagementdienstzugriffspunkten. Über diese Dienstzugriffspunkte stellt der Buscontroller 5 je eine Anforderungsempfangswarteschlange und eine Antwortsendewarteschlange zur Verfügung. Die Warteschlangen dienen der Abwicklung von Vernetzungsbus-Verwaltungsaufgaben.

In manchen Fällen kann es sinnvoll oder nötig sein, den gesamten Datenverkehr über den Vernetzungsbus 1 zentral mit zu protokollieren. Zu diesem Zweck ist die durch das Teilsegment 19 definierte Monitorwarteschlange eingerichtet.

Die Monitorwarteschlange wird nur aufgebaut, wenn der Buscontroller 5 vom Prozessor 3 entsprechend instruiert ist.

Im Falle einer derartigen Instruktion wird jede Nachricht, unabhängig von Sender und Empfänger, von dem entsprechend instruierten Buscontroller 5 empfangen und in der Monitorwarteschlange abgespeichert. Die Monitorwarteschlange besteht aus einer festen Anzahl von Verwaltungsblöcken, die als ringförmig einfach verkettete Liste organisiert sind. Im Warteschlangenkopf, der durch das Teilsegment 19 gebildet ist, sind ein Lese- und ein Schreibzeiger abgespeichert, die jeweils auf das als nächstes zu lesende bzw. zu schreibende Warteschlangenelement zeigen. Die Monitorwarteschlange wird also als Umlaufpuffer betrieben.

Im Gegensatz zu den Warteschlangenelementen der anderen Warteschlangen erfolgt bei den Verwaltungsblöcken der Monitorwarteschlange keine Weiterverzeigerung zu den Daten, sondern die Daten sind direkt im jeweiligen Verwaltungsblock abgespeichert.

Anstelle einer entsprechenden Vorabinstruierung des Buscontrollers 5 kann das Auslösen des Protokollierens des Datenverkehrs auch durch bestimmte Ereignisse getriggert sein. Ein Beispiel eines derartigen Ereignisses ist ein bestimmtes Telegramm, das an den Buscontroller 5 übertragen wird.

Schließlich verwaltet der Buscontroller 5 noch eine Identifizierungswarteschlange. Die Identifizierungswarteschlange besteht aus dem Warteschlangenkopf, der durch das Teilsegment 19' gebildet ist, und einem einzigen Warteschlangenelement. In diesem Warteschlangenelement ist eine vernetzungsbusbezogene Buscontrolleridentifikationsmeldung abgespeichert. Die Meldung umfaßt beispielsweise den Controllertyp, die Controlleradresse und dergleichen mehr. Die Identifikationsmeldung wird z. B. dann gesendet, wenn der Buscontroller 5 neu an den Vernetzungsbus 1 angekoppelt wurde. Nach dem Senden der Identifikationsmeldung wird das Warteschlangenelement aber nicht aus der Identifizierungswarteschlange ausgekettet.

Abschließend sei noch erwähnt, daß die obenstehend beschriebene Erfindung selbstverständlich nicht auf das Ausführungsbeispiel beschränkt ist. So müssen die Warteschlangen beispielsweise nicht in hoch- und niederpriore Warteschlangen aufgeteilt sein. Ebenso ist es möglich, die Erledigungswarteschlangen für gesendete und empfangene Anforderungen zusammenzufassen. Auch die Aufteilung in Erledigungswarteschlangen für ordnungsgemäß und nicht ordnungsgemäß gesendete Anforderungen ist nicht erforderlich. Ferner ist auch ein anderer Aufbau der Verwaltungsblöcke 22 möglich.

## Patentansprüche

1. Buscontroller für ein elektronisches Gerät (2), das eine eigene Intelligenz (3) und einen Speicher (4) mit einer Vielzahl einzeln adressierbarer Speicherplätze (z.B. 21,40) aufweist, die über einen Gerätebus (6) miteinander verbunden sind, wobei der Buscontroller (5) zumindest mit dem Speicher (4) und einem Vernetzungsbus (1) verbindbar ist, wobei der Buscontroller (5) mindestens eine Anforderungsempfangswarteschlange mit Warteschlangenelementen für über den Vernetzungsbus (1) zu empfangende Anforderungen verwaltet, wobei die Warteschlange als doppelt verkettete Liste organisiert ist.

2. Buscontroller nach Anspruch 1, **dadurch gekennzeichnet,**
- daß er eine Erledigungswarteschlange für empfangene Anforderungen verwaltet, wobei die Erledigungswarteschlange als doppelt verkettete Liste organisiert ist und
- daß nach dem Empfangen einer Anforderung das erste Element der Anforderungsempfangswarteschlange aus der Anforderungsempfangswarteschlange ausgekettet und als letztes Element in die Erledigungswarteschlange eingekettet wird.

3. Buscontroller nach Anspruch 1 oder 2, **dadurch gekennzeichnet,** daß er auch mindestens eine Anforderungssendewarteschlange mit Warteschlangenelementen für zu sendende Anforderungen verwaltet, wobei die Anforderungssendewarteschlange als doppelt verkettete Liste organisiert ist.

4. Buscontroller nach Anspruch 3, **dadurch gekennzeichnet,**
- daß der Buscontroller (5) mindestens eine Erledigungswarteschlange für gesendete Anforderungen verwaltet, wobei die Erledigungswarteschlange als doppelt verkettete Liste organisiert ist,
- daß beim Senden einer Anforderung das erste Element der Anforderungssendewarteschlange gesendet wird und
- daß das Element nach dem Senden aus der Anforderungswarteschlange ausgekettet und als letztes Element in die Erledigungswarteschlange eingekettet wird.

5. Buscontroller nach Anspruch 2 und 4, **dadurch gekennzeichnet,** daß er getrennte Erledigungswarteschlangen für gesendete und empfangene Anforderungen verwaltet.

6. Buscontroller nach Anspruch 3, 4 oder 5, **dadurch gekennzeichnet,** daß den zu sendenden Anforderungen eine von mehreren Prioritätsstufen zugeordnet ist und daß der Buscontroller für jede Prioritätsstufe eine eigene Anforderungssendewarteschlange verwaltet.

7. Buscontroller nach Anspruch 4 und 6, **dadurch gekennzeichnet,** daß er für jede Prioritätsstufe eine eigene Erledigungswarteschlange verwaltet.

8. Buscontroller nach einem der Ansprüche 4 bis 7, **dadurch gekennzeichnet,** daß er getrennte Erledigungswarteschlangen für ordnungsgemäß gesendete und für nicht ordnungsgemäß gesendete Anforderungen verwaltet.

9. Buscontroller nach einem der obigen Ansprüche, **dadurch gekennzeichnet,** daß er eine Monitorwarteschlange zum Überwachen des Vernetzungsbusses (1) verwaltet.

10. Buscontroller nach einem der obigen Ansprüche, **dadurch gekennzeichnet,** daß er eine Identifizierungswarteschlange mit einem einzigen Warteschlangenelement verwaltet, wobei in dem Warteschlangenelement eine vernetzungsbusbezogene Buscontrolleridentifikationsmeldung abgespeichert ist.

11. Buscontroller für ein elektronisches Gerät (2), das eine eigene Intelligenz (3) und einen Speicher (4) mit einer Vielzahl einzeln adressierbarer Speicherplätze (z.B. 21,40) aufweist, die über einen Gerätebus (6) miteinander verbunden sind, wobei der Buscontroller (5) zumindest mit dem Speicher (4) und einem Vernetzungsbus (1) verbindbar ist, insbesondere Buscontroller nach einem der obigen Ansprüche,
- wobei durch das elektronische Gerät (2) mindestens eine Eigenapplikation abarbeitbar ist,
- wobei die Eigenapplikation über den Vernetzungsbus (1) mit einer Fremdapplikation, die durch ein anderes, ebenfalls mit dem Vernetzungsbus (1) verbindbares elektronisches Gerät abarbeitbar ist, kommuniziert,
- wobei der Buscontroller (5) für die Kommunikation zwischen der Eigenapplikation und der Fremdapplikation mindestens einen Kommunikationsdienstzugriffspunkt mit mindestens einer Warteschlange für zu empfangende Anforderungen bereitstellt.

12. Buscontroller nach Anspruch 11, **dadurch gekennzeichnet,**
- daß durch das elektronische Gerät (2) mindestens zwei Eigenapplikationen abarbeitbar sind,
- daß die Eigenapplikationen über den Vernetzungsbus (1) mit mindestens einer Fremdapplikation, die durch ein anderes, ebenfalls mit dem Vernetzungsbus (1) verbindbares elektronisches Gerät (2) abarbeitbar ist, kommunizieren und
- daß der Buscontroller (5) für die Kommunikation mindestens einer der Eigenapplikationen mit der Fremdapplikation einen eigenen Kommunikationsdienstzugriffspunkt bereitstellt.

13. Buscontroller nach Anspruch 12, **dadurch gekennzeichnet,** daß er für die Kommunikation jeder Eigenapplikation mit der Fremdapplikation je einen eigenen Kommunikationsdienstzugriffspunkt bereitstellt.

14. Buscontroller nach Anspruch 11, 12 oder 13, **dadurch gekennzeichnet,** daß er mindestens einen Servicemanagementdienstzugriffspunkt mit mindestens einer Warteschlange für zu empfangende Anforderungen für Vernetzungsbus-Verwaltungsaufgaben bereitstellt.

15. Buscontroller nach einem der Ansprüche 11 bis 14, **dadurch gekennzeichnet,** daß er für jeden Dienstzugriffspunkt je eine Empfangswarteschlange für zu empfangende Anforderungen und eine Antwortwarteschlange für zu sendende Antworten auf empfangene Anforderungen verwaltet.

16. Buscontroller für ein elektronisches Gerät (2), das eine eigene Intelligenz (3) und einen Speicher (4) mit einer Vielzahl einzeln adressierbarer Speicherplätze (z.B. 21,40) aufweist, die über einen Gerätebus (6) miteinander verbunden sind, wobei der Buscontroller (5) zumindest mit dem Speicher (4) und einem Vernetzungsbus (1) verbindbar ist, insbesondere Buscontroller nach einem der obigen Ansprüche,
- wobei Intelligenz (3) Anforderungen und Antworten gemäß einem übergeordneten Protokoll verwaltet,
- wobei der Buscontroller (5) mindestens eine Anforderungssendewarteschlange für zu sendende Anforderungen und mindestens eine Anforderungswarteschlange für zu empfangende Anforderungen, vorzugsweise auch eine Erledigungswarteschlange für gesendete und/oder empfangene Anforderungen, verwaltet,
- wobei die Warteschlangen je aus einem Warteschlangenkopf und Verwaltungsblöcken als Warteschlangeneinträgen bestehen,
- wobei in den Verwaltungsblöcken
-- verwaltungsblockspezifische Warteschlangenverwaltungsdaten,
-- nutzdatenspezifische Speicherverwaltungsdaten und
-- Verwaltungsdaten des übergeordneten Protokolls abgespeichert sind.

17. Buscontroller nach Anspruch 16, **dadurch gekennzeichnet,** daß die Nutzdaten außerhalb der Verwaltungsblöcke in mindestens einem Datenblock abgespeichert sind und daß die nutzdatenspezifischen Speicherverwaltungsdaten zumindest Startadressen und Länge des Datenblocks umfassen.

18. Buscontroller nach Anspruch 16 oder 17, **dadurch gekennzeichnet,** daß er Anforderungen gemäß einem vorbestimmten Busprotokoll über den Vernetzungsbus (1) sendet und daß in den Verwaltungsblöcken zusätzlich anforderungsspezifische Protokollrahmendaten abgespeichert sind.

19. Buscontroller nach Anspruch 16, 17 oder 18, **dadurch gekennzeichnet,** daß er Anforderungen gemäß einem vorbestimmten Busprotokoll über den Vernetzungsbus (1) empfängt und daß im Warteschlangenkopf der Anforderungsempfangswarteschlange Vergleichsdaten zum Vergleich mit empfangenen anforderungsspezifischen Protokollrahmendaten abgespeichert sind.

20. Elektronisches Gerät mit einer eigenen Intelligenz (3), einem Speicher (4) mit einer Vielzahl einzeln adressierbaren Speicherplätze (z. B. 21,40) und einem Buscontroller (5) nach einem der obigen Ansprüche, wobei die Intelligenz (3), der Speicher (4) und der Buscontroller (5) über einen Geratebus (6) miteinander verbunden sind, wobei der Buscontroller (5) mit einem Vernetzungsbus (1) verbindbar ist.
